# EUROPÄISCHE PATENTSCHRIFT

(11) **EP 2 944 515 B1**
(45) Veröffentlichungstag und Bekanntmachung des Hinweises auf die Patenterteilung: **07.06.2023**
(21) Anmeldenummer: 15164964.7
(22) Anmeldetag: 24.04.2015
(51) Int. Cl.: B60Q 1/26, F01N 13/14

(54) **LANDWIRTSCHAFTLICHES FAHRZEUG**
AGRICULTURAL VEHICLE
VÉHICULE AGRICOLE

(30) Priorität: 14.05.2014 DE 102014106789
(43) Veröffentlichungstag der Anmeldung: 18.11.2015
(73) Patentinhaber: CLAAS Tractor S.A.S., 78141 Vélizy-Villacoublay Cedex (FR)
(72) Erfinder: Dalaudiere, Robert, 78140 Velizy (FR); Jacquemart, Thomas, 91120 Palaiseau (FR); Santos, Cedric, 94130 Nogent Sur Marne (FR)
(74) Vertreter: CLAAS Gruppe

(56) Entgegenhaltungen:
- WO-A1-2010/069806
- JP-A- H1 178 547
- JP-A- 2000 344 008
- US-A1- 2009 279 319

## Beschreibung

Die Erfindung betrifft ein landwirtschaftliches Fahrzeug, insbesondere einen Traktor gemäß Anspruch 1.

Landwirtschaftliche Fahrzeuge wie beispielsweise Traktoren sind zunehmend mit Abgasanlagen ausgestattet, die zur Reduktion bestimmter Stickoxide im Abgas des Verbrennungsmotors eine sogenannte selektive katalytische Reduktion durchführen. Dazu wird in Form einer wässrigen Harnstofflösung mitgeführtes Ammoniak vor einem sogenannten selektiven Katalysator - auch SCR-Filter genannt ("SCR": gebräuchlicher englischer Ausdruck für "selective catalytic reduction") - in den Abgasstrang eingespritzt, wobei aus der Harnstoff-Wasser-Lösung durch eine Hydrolysereaktion Ammoniak und CO₂ entstehen. Das so erzeugte Ammoniak kann im selektiven Katalysator bei entsprechender Temperatur mit den Stickoxiden im Abgas reagieren. Die Menge des eingespritzten Harnstoffs ist von der motorischen Stickoxidemission und damit von der momentanen Drehzahl und dem Drehmoment des Motors abhängig. Derartige Abgasanlagen an landwirtschaftlichen Fahrzeugen sind für sich gesehen seit Jahren bekannt. In diesem Zusammenhang sei beispielhaft auf die WO2010/069806 A1 verwiesen, die einen mit einer entsprechenden Abgasnachbehandlungsanlage ausgestatteten Traktor offenbart.

Mit zunehmender Motorleistung steigen auch die Leistungsanforderungen an die Abgasnachbehandlungsanlage. Dies führt dazu, dass der selektive Katalysator - in der Regel ein im Wesentlichen zylindrisches Bauteil - verhältnismäßig große äußere Abmessungen aufweisen muss. Da sich der selektive Katalysator im Betrieb stark erhitzt, ist es zudem erforderlich, diesen nach außen hin durch zumindest eine Schutzeinrichtung vor versehentlichen Berührungen abzuschirmen. Dies vergrößert dessen Außenmaße abermals.

Da insbesondere bei Traktoren die Abgasanlage zumeist seitlich vor der Fahrerkabine angeordnet ist und sich vertikal nach oben erstreckt, verschlechtern große Außenmaße die Sicht für einen innerhalb der Fahrerkabine sitzenden Fahrer, was bei den mit dem Traktor auf Feld, Hof und/oder Straße vorzunehmenden Arbeiten von grundsätzlichem Nachteil ist. Eine weitere Verschlechterung der Sicht ergibt sich dadurch, dass Traktoren aufgrund ihrer gewünschten Straßentauglichkeit üblicherweise mit einem Fahrrichtungsanzeiger ("Blinker") und/oder Positionsleuchten ausgestattet sind. Dieser ist beispielsweise an einem vorderen Pfosten der Fahrerkabine angebracht. Weist der Traktor eine groß bemessene Abgasnachbehandlungsanlage auf, so ist zur Anbringung des Fahrrichtungsanzeigers und/oder der Positionsleuchte eine verhältnismäßig aufwendige Halterung erforderlich, um nämlich zu gewährleisten, dass der Fahrrichtungsanzeiger und/oder die Positionsleuchte vor und mit sicherem Abstand zur Abgasnachbehandlungsanlage gehalten wird. Die aufwendige Halterung verschlechtert dabei die Sicht des Fahrers, ist daneben konstruktiv aufwendig und erhöht das Fahrzeuggewicht.

Es ist eine Aufgabe der vorliegenden Erfindung, ein landwirtschaftliches Fahrzeug, insbesondere einen Traktor der genannten Art anzugeben, bei dem sich trotz Vorhandenseins einer Abgasnachbehandlungsanlage eine nur geringe Sichtbeeinträchtigung durch sicherheitsrelevante Beleuchtungselemente ergibt.

Die Aufgabe wird gelöst durch ein Fahrzeug mit den Merkmalen des Anspruchs 1. Dieses zeichnet sich dadurch aus, dass die Abgasnachbehandlungsanlage dazu ausgebildet ist, zumindest ein Beleuchtungselement, insbesondere einen Fahrtrichtungsanzeiger und/oder eine Positionsleuchte des Fahrzeugs aufzunehmen, wobei die Abgasnachbehandlungsanlage von einem Halter aufgenommen wird, der an einer Rahmenstruktur des Fahrzeugs befestigt ist, wobei der Abgaskatalysator und/oder -filter von einer mantelförmigen Struktur umgeben ist, die sich am Halter abstützt, und wobei es sich bei der mantelförmigen Struktur um eine tragende Baueinheit handelt, die zur Aufnahme zumindest des Beleuchtungselements, vorzugsweise auch einer elektronischen Steuereinheit, dient.

Mit anderen Worten, liegt die Grundidee der Erfindung darin, ein Beleuchtungselement wie einen Fahrtrichtungsanzeiger und/oder eine Positionsleuchte des Fahrzeugs mittels der Abgasnachbehandlungsanlage am Fahrzeug zu befestigen, indem der Fahrtrichtungsanzeiger und/oder die Positionsleuchte ausschließlich über die Abgasnachbehandlungsanlage mit dem Fahrzeug verbunden ist. Erfindungsgemäß wird somit die Abgasnachbehandlungsanlage zu einem tragenden Element für das Beleuchtungselement. Durch die direkte Aufnahme des Beleuchtungselements an der Abgasnachbehandlungsanlage ist eine aufwendige Halterung, die beispielsweise - wie herkömmlich - von der Fahrerkabine nach vorn und seitlich mit Abstand um die Abgasanlage herumgeführt werden muss, nicht mehr erforderlich. Stattdessen kann das Beleuchtungselement mit verhältnismäßig kurz bauender Halterung in der geeigneten Position befestigt werden. Dadurch wird die Sicht aus der Fahrerkabine geringstmöglich beeinträchtigt und es ergibt sich ein verringertes Gesamtgewicht bei vereinfachter Konstruktion und Montierbarkeit (Beleuchtungselement ist komplett mit der Abgasnachbehandlungsanlage montierbar). Die genannte Aufgabe wird somit gelöst.

Gemäß einer zweckmäßigen Ausführung des Fahrzeugs weist der Abgaskatalysator und/oder -filter eine im Wesentlichen zylindrische Grundform auf und ist so ausgerichtet, dass dessen Mittelachse bezogen auf eine Längsachse des Fahrzeugs senkrecht nach oben verläuft.

Vorteilhaft weist weiterhin das Fahrzeug eine Fahrerkabine mit mehreren ein Kabinendach tragenden Pfosten auf, wobei der Abgaskatalysator und/oder -filter im Wesentlichen parallel zu einem der Pfosten ausgerichtet ist. Durch eine parallele Ausrichtung zu einem der Pfosten ergibt sich auch bei großer Baulänge des Abgaskatalysators und/oder -filters eine zumindest geringstmögliche Sichtbeeinträchtigung.

Hinsichtlich der Anordnung erweist es sich als vorteilhaft, wenn die Fahrerkabine einen etwa mittig angeordneten Fahrersitz aufweist und der Abgaskatalysator und/oder -filter relativ zu einem insbesondere vorderen Pfosten der Fahrerkabine so angeordnet ist, dass für einen auf dem Fahrersitz sitzenden Fahrer der Pfosten die Sicht auf den Abgaskatalysator und/oder -filter weitestgehend verdeckt. Anders ausgedrückt, befindet sich vorteilhaft der Abgaskatalysator und/oder -filter aus Fahrersicht in einer Linie mit dem vorderen Pfosten der Fahrerkabine, was für den Fahrer den Effekt einer möglichst geringen Sichteinschränkung hat.

Zweckmäßigerweise kann der Halter mit geeigneten Flanschen versehen sein.

Die Abgasnachbehandlungsanlage kann grundsätzlich unterschiedlicher Art sein. Bevorzugt weist die Abgasnachbehandlungsanlage einen selektiven Katalysator mit im Wesentlichen zylindrischer Grundform auf, der an dem Halter befestigt ist.

Eine vorteilhafte Weiterbildung sieht vor, dass die mantelförmige Struktur aus zwei Halbschalen gebildet wird. Diese mantelförmige Struktur kann unterschiedliche Funktionen aufweisen. Zunächst kann hierdurch ein Hitzeschutz bereitgestellt werden.

Damit vorteilhaft gewährleistet, dass der selektive katalytische Filter weitestgehend von mechanischer Beanspruchung durch übrige Elemente der Abgasnachbehandlungsanlage verschont bleibt.

Gemäß einer vorteilhaften Weiterbildung ist an einer dem Abgaskatalysator und/oder - filter nachgelagerten Rohranordnung eine mit dem Abgaskatalysator und/oder -filter in funktionaler Beziehung stehende Messeinrichtung angeordnet. Hierbei kann es sich insbesondere um einen oder mehrere Sensoren handeln, mit denen sich Zustände des Abgases, beispielsweise dessen Zusammensetzung und/oder Temperatur, Druck, Feuchtigkeit oder dergleichen erfassen lassen.

Die mantelförmige Struktur und/oder eine die mantelförmige Struktur umgebende Hitzeschutzstruktur ist vorteilhaft so gestaltet, dass diese eine Führung zur Aufnahme eines oder mehrerer Kabel aufweist, das wiederum zum Anschluss des Beleuchtungselements und/oder einer Komponente der Abgasnachbehandlungsanlage dient.

Zur Gewährleistung eines hinreichenden Hitzeschutzes, ist auf weiterhin vorteilhafte Weise die mantelförmige Struktur von einer Hitzeschutzstruktur umgeben. Diese kann beispielsweise eine Gitterstruktur umfassen, die in einem Abstand die mantelförmige Struktur umgibt. Zweckmäßigerweise weist diese zumindest eine Aussparung auf, durch welche das Beleuchtungselement nach außen abragt. Somit ist gewährleistet, dass das an der mantelförmigen Struktur befestigte Beleuchtungselement von außen sichtbar ist.

Eine vorteilhafte Weiterbildung sieht weiterhin vor, dass das Beleuchtungselement mittels eines eigenen Gehäuses an der mantelförmigen Struktur befestigt ist. Dabei ist eine der Abgasnachbehandlungsanlage zugeordnete elektronische Steuereinrichtung bevorzugt in die für das Beleuchtungselement vorgesehene Gehäuseeinheit integriert. Das Gehäuse wird somit vorteilhaft zweifach genutzt, als Aufnahme für das Beleuchtungselement und als Aufnahme für die elektronische Steuereinrichtung. Eine Kabelführung zu der Gehäuseeinheit lässt sich somit vorteilhaft mehrfach nutzen, was eine konstruktive und montagemäßige Vereinfachung darstellt.

Die Erfindung wird nachfolgend anhand eines einzigen in der beigefügten Zeichnung gezeigten Ausführungsbeispiels näher erläutert. Daraus ergeben sich auch weitere vorteilhafte Effekte. In der Zeichnung zeigt:
- Fig. 1: eine schematische Ansicht eines Traktors von vorn,
- Fig. 2: eine Ansicht einer Abgasnachbehandlungsanlage von vorn,
- Fig. 3: eine Detailansicht der in Fig. 2 gezeigten Abgasnachbehandlungsanlage bei entferntem Deckel und geöffnetem Leuchtengehäuse,
- Fig. 4: eine Explosionsdarstellung der in Fig. 2 gezeigten Abgasnachbehandlungsanlage.

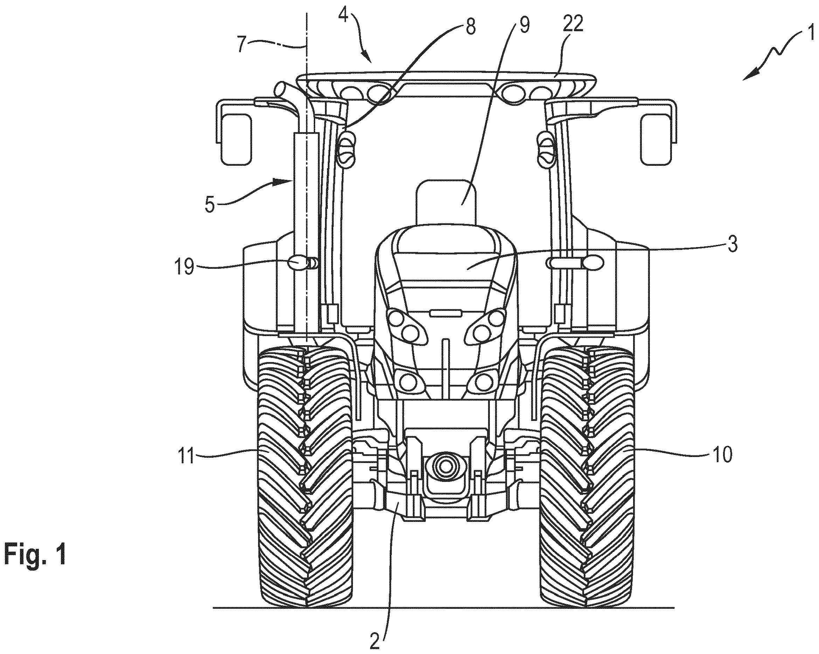

In Fig. 1 ist ein Traktor 1 schematisch von vorn dargestellt. Der Traktor 1 weist auf für sich gesehen bekannte Weise vier Räder auf, von denen in dieser Ansicht die beiden Vorderräder, insbesondere ein linkes Vorderrad 10 und ein rechtes Vorderrad 11 zu sehen sind. Eine Rahmenstruktur 2 stützt sich über die vier Räder gegenüber dem Boden ab. Auf die Rahmenstruktur 2 ist ein nicht näher dargestellter, weil durch die Motorhaube verdeckter Verbrennungsmotor 3 (Dieselmotor) aufgebaut, der zum Antrieb des Traktors 1 dient. Ebenfalls auf die Rahmenstruktur 2 aufgebaut ist eine Fahrerkabine 4. Die Fahrerkabine 4 weist obenseitig ein Kabinendach 22 auf, das sich über mehrere Pfosten abstützt. Innerhalb der Fahrerkabine 4 befindet sich in einem mittigen Bereich ein Fahrersitz 9 zur Aufnahme eines Fahrers.

In der Nähe eines vorderen, bezogen auf die Fahrtrichtung des Traktors 1 rechten Pfostens 8 der Fahrerkabine 4 ist eine Abgasnachbehandlungsanlage 5 angeordnet. Diese ist über eine nicht näher dargestellte Rohranordnung mit dem Verbrennungsmotor 3 verbunden, um Abgase, die während des Betriebs des Verbrennungsmotors 3 entstehen, unter Reduzierung von Schadstoffen an die Umgebung abzuführen. Die Abgasnachbehandlungsanlage 5 weist dazu einen Abgaskatalysator auf, der zur Durchführung einer selektiven katalytischen Reaktion geeignet ist.

Die Gestaltung der Abgasnachbehandlungsanlage 5 ist insofern besonders, als dass ein Beleuchtungselement 19, bei dem es sich hier um einen kombinierten Fahrtrichtungsanzeiger und eine Positionsleuchte des Traktors 1 handelt, an der Abgasnachbehandlungsanlage 5 befestigt ist. Daraus ergibt sich, dass die Abgasnachbehandlungsanlage 5 zu einer tragenden Einheit für das Beleuchtungselement 19 wird. Durch die direkte Aufnahme des Beleuchtungselements 19 an der Abgasnachbehandlungsanlage 5 ist eine aufwendige Halterung, die beispielsweise - wie herkömmlich - von der Fahrerkabine nach vorn und seitlich mit Abstand um die Abgasanlage herumgeführt werden müsste, nicht mehr erforderlich. Stattdessen wird das Beleuchtungselement 19 mit verhältnismäßig kurz bauender Halterung in der geeigneten Position befestigt. Dadurch wird die Sicht aus der Fahrerkabine 4 geringstmöglich beeinträchtigt und es ergibt sich ein verringertes Gesamtgewicht bei vereinfachter Konstruktion und Montierbarkeit (Beleuchtungselement ist komplett mit der Abgasnachbehandlungsanlage montierbar).

Der Aufbau der Abgasnachbehandlungsanlage 5 im Einzelnen sei anhand der folgenden Figuren näher erläutert:

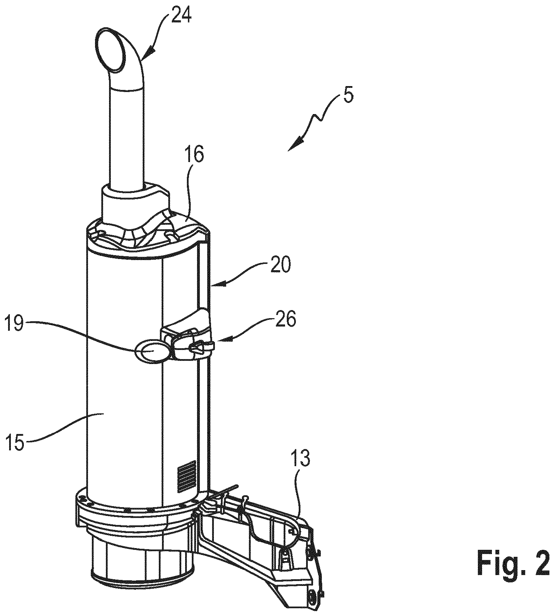

Fig. 2 zeigt die Abgasnachbehandlungsanlage 5 in einer perspektivischen Ansicht von vorn (bezogen auf einen an den Traktor 1 angebauten Zustand). Demnach wird die gesamte Abgasnachbehandlungsanlage 5 von einem Halter 13 getragen. Es handelt sich dabei um ein längliches Gussteil, das an einem rahmenseitigen Ende mit einem senkrechten Flansch versehen ist, um mit der Rahmenstruktur 2 des Traktors 1 (vgl. Fig. 1) verbunden werden zu können. Am gegenüberliegenden Ende bildet der Halter 13 einen liegenden Ring zur Aufnahme der Abgasnachbehandlungsanlage 5. Die Abgasnachbehandlungsanlage 5 weist in einem mittleren Bereich eine durch einen innenliegenden selektiven Katalysator (hier nicht zu sehen, da durch das Schutzgitter 15 verdeckt) vorgegebene zylindrische Grundform auf, die durch ein eine Mantelfläche eines Zylinders bildendes Schutzgitter 15 nach außen begrenzt wird. Ein Deckel 16 schließt den zylindrischen Bereich nach oben ab und bildet einen Durchgang für eine sich nach oben erstreckende Rohranordnung 24. Die Rohranordnung 24 ist an den selektiven Katalysator angeschlossen und dient zum Abführen von Abgasen aus der Abgasnachbehandlungsanlage 5 an die Umgebung.

Wie in Fig. 2 zu sehen, ist an der Abgasnachbehandlungsanlage 5 ein Beleuchtungselement 19 angebracht, das eine Kombination aus einem Fahrtrichtungsanzeiger ("Blinker") und einer Positionsleuchte umfasst. Gemäß der Ansicht von Fig. 2 weist das Beleuchtungselement 19 dabei eine in der seitlichen Projektion ovale Grundform mit liegender Ausrichtung auf. Ein bezogen auf die Vorwärtsrichtung des Traktors 1 rechter (außenliegender) Bereich des Beleuchtungselements 19 ist als Fahrtrichtungsanzeiger mit farbiger (z.B. oranger) Lichtabgabe ausgebildet, während ein linker (innenliegender) Bereich des Beleuchtungselements 19 als Positionsleuchte (weißes Licht) dient. Alternativ kann das Beleuchtungselement 19 ausschließlich als Fahrtrichtungsanzeiger oder ausschließlich als Positionsleuchte ausgebildet sein.

Das Beleuchtungselement 19 wird von einem Leuchtengehäuse 18 aufgenommen, das durch eine im Schutzgitter 15 vorgesehene Aussparung 26 an einer innenliegenden, daher in Fig. 2 nicht sichtbaren mantelförmigen Struktur 23 befestigt ist. Gemäß der Darstellung von Fig. 2, die eine Ansicht der Abgasnachbehandlungsanlage 5 von vorn ist, sind der Fahrtrichtungsanzeiger und die Positionsleuchte bezogen auf die Vorwärtsfahrtrichtung des Traktors 1 vor dem Schutzgitter 15 der Abgasnachbehandlungsanlage 5 angeordnet und sind somit von vorn sichtbar. Dabei ist das Beleuchtungselement 19 ausschließlich an der Abgasnachbehandlungsanlage 5 befestigt. Eine eigene, separate Befestigung des Beleuchtungselements 19 am Traktor 1 entfällt somit.

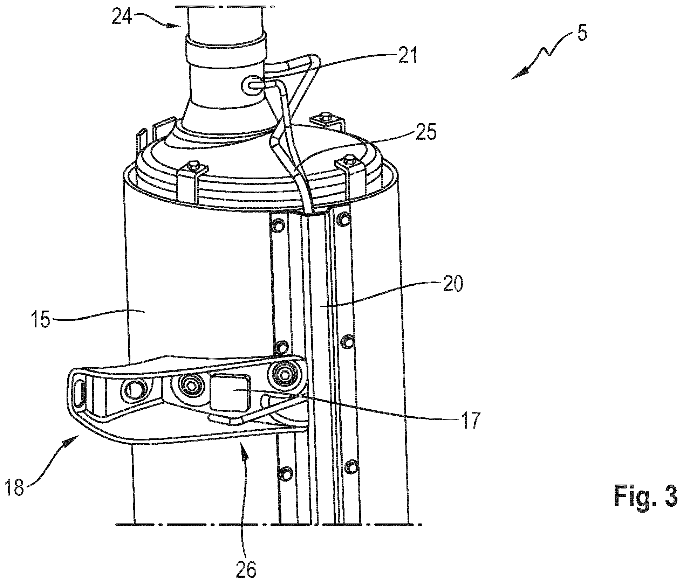

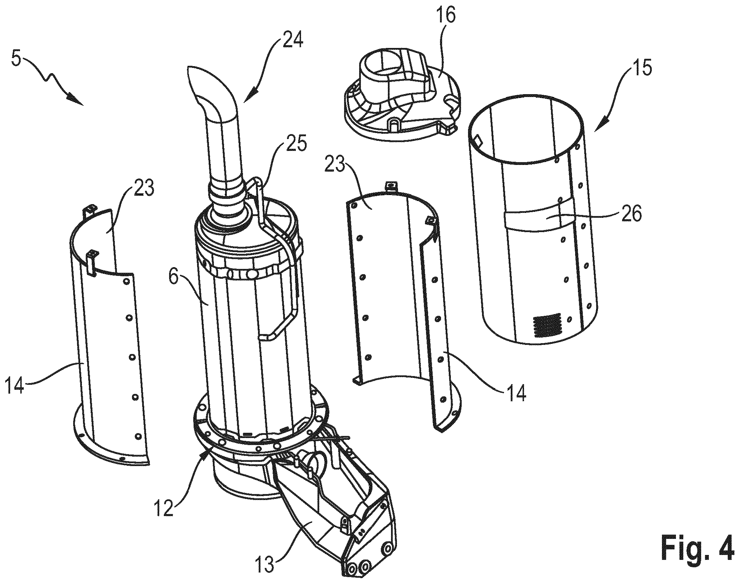

Der Aufbau der Abgasanlage 5 wird nachfolgend anhand der Fig. 3 und 4 noch näher erläutert. Dabei zeigt Fig. 3 eine Detailansicht der Abgasnachbehandlungsanlage 5 bei entferntem Deckel 16 und geöffnetem Leuchtengehäuse 18. Der komplette Aufbau der Abgasanlage 5 wird am deutlichsten in Fig. 4, die eine Explosionsdarstellung der Abgasnachbehandlungsanlage 5 ist.

In Fig. 4 ist zu sehen, dass der Träger 13 in seinem ringförmigen Bereich eine Flanschfläche bildet, die mit einer Flanschfläche eines selektiven Katalysators 6 korrespondiert und mit dieser in Kontakt steht. Über den Umfang verteilte Schrauben dienen zur Verbindung des selektiven Katalysators 6 an dem Träger 15. Der selektive Katalysator 6 weist eine im Wesentlichen zylindrische Grundform auf. An seiner Deckfläche ist der selektive Katalysator 6 mit einer Rohranordnung 24 verbunden, die sich zunächst parallel zur Mittelachse 7 des selektiven Katalysators 6 nach oben erstreckt und endseitig eine Krümmung aufweist. In einem unteren Bereich der Rohranordnung 24 ist diese mit einem oder mehreren Sensoren versehen 21, die zur Erfassung eines oder mehrerer Zustände (beispielsweise Zusammensetzung, Temperatur oder dergleichen) von Abgasen dient, die den selektiven Katalysator 6 verlassen haben.

Der selektive Katalysator 6 erreicht im Betrieb hohe Temperaturen und eignet sich nicht dazu, mechanisch hoch beansprucht zu werden. Der selektive Katalysator 6 wird daher - im zusammengebauten Zustand der Abgasnachbehandlungsanlage 5 - von einer mantelförmigen Struktur 23 umgeben. Diese umfasst zwei Halbschalen 14, die sich zu einem geschlossenen Mantel zusammensetzen und miteinander verbinden lassen. Die so gebildete mantelförmige Struktur 23 stützt sich gemeinsam mit dem selektiven Katalysator 6 gegenüber dem Träger 13 ab, wozu an einem unteren Bereich der mantelförmigen Struktur 23 eine ringförmige Flanschfläche ausgebildet ist, über welche auch die mantelförmige Struktur 23 mit dem Träger 13 verbindbar ist. Die mantelförmige Struktur 23 ist als tragende Baueinheit ausgelegt. Die Halbschalen 14 sind aus Metall gefertigt und bieten somit einen thermisch isolierenden Schutz für den selektiven Katalysator 6.

Die mantelförmige Struktur 23 ist außen, mit einer gewissen radialen Beabstandung, von einem Schutzgitter 15 umgeben. Das Schutzgitter 15 dient insbesondere zum Schutz des selektiven Katalysators 6 vor versehentlichen Berührungen durch Personen oder Gegenstände in dessen Nähe. Im Schutzgitter 15 ist eine Aussparung 26 für das Beleuchtungselement 19 vorgesehen.

In Fig. 3 ist zu sehen, dass an dem Schutzgitter 15 eine längliche Kabelführung 20 vorgesehen ist. Diese erstreckt sich, wie in Fig. 2 zu sehen, über die gesamte Länge des Schutzgitters 15. Ein an den bzw. die Sensoren 21 angeschlossenes Kabel 25 verläuft durch die Kabelführung 20 hindurch zu einer der Abgasnachbehandlungsanlage 5 zugeordneten elektronischen Steuereinheit 17, die in dem Leuchtengehäuse 18 angeordnet ist. Die Kabelführung 20 ermöglicht weiterhin eine gemeinsame Führung elektrischer Leitungen sowohl für die elektronische Steuereinheit 17 als auch für das Beleuchtungselement 19 bis hinunter zum Träger 13 und bietet somit auf geeignete Weise Schutz vor störenden Außeneinflüssen wie insbesondere Feuchtigkeit und mechanischer Beanspruchung. Durch Öffnen des Leuchtengehäuses 18 ist auf einfache Weise ein Zugang zur elektronischen Steuereinheit 17 möglich.

Bei dem anhand der Fig. 1 bis 4 erläuterten Traktor 1 ergibt sich der vorteilhafte Effekt, dass trotz Vorhandenseins einer einen selektiven Katalysator 6 umfassenden Abgasnachbehandlungsanlage 5 eine nur geringe Sichtbeeinträchtigung durch den Fahrtrichtungsanzeiger und die Positionsleuchte besteht. Im Betrieb heiß werdende Oberflächen werden sicher geschützt vor unbeabsichtigter Berührung. Daneben ist mit einfachen und sicheren Mitteln eine Möglichkeit der Verkabelung elektronischer Komponenten der Abgasnachbehandlungsanlage und des Fahrtrichtungsanzeigers und der Positionsleuchte geschaffen. Durch den verringerten konstruktiven Aufwand ist die Montage vereinfacht und es ergibt sich ein reduziertes Gesamtgewicht für das Fahrzeug.

### Bezugszeichenliste

- 1: Traktor
- 2: Rahmenstruktur
- 3: Verbrennungsmotor
- 4: Fahrerkabine
- 5: Abgasnachbehandlungsanlage
- 6: selektiver Katalysator
- 7: Mittelachse
- 8: Pfosten, rechts vorn
- 9: Fahrersitz
- 10: Vorderrad, rechts
- 11: Vorderrad, links
- 12: Flansch
- 13: Halter
- 14: Halbschale
- 15: Schutzgitter
- 16: Deckel
- 17: elektronische Steuereinheit
- 18: Leuchtengehäuse
- 19: Fahrtrichtungsanzeiger und Positionsleuchte
- 20: Kabelführung
- 21: SCR-Sensor
- 22: Kabinendach
- 23: mantelförmige Struktur
- 24: Rohranordnung
- 25: Kabel
- 26: Aussparung

## Patentansprüche

1. Landwirtschaftliches Fahrzeug, insbesondere Traktor (1), mit einem Verbrennungsmotor (3), dem eine Abgasnachbehandlungsanlage (5) zugeordnet ist, die wenigstens einen Abgaskatalysator und/oder -filter (6) zur Reduzierung von Emissionen des Verbrennungsmotors (3) aufweist,
**dadurch gekennzeichnet, dass** die Abgasnachbehandlungsanlage (5) dazu ausgebildet ist, zumindest ein Beleuchtungselement (19), insbesondere einen Fahrtrichtungsanzeiger und/oder eine Positionsleuchte des Fahrzeugs (1) aufzunehmen,
wobei die Abgasnachbehandlungsanlage (5) von einem Halter (13) aufgenommen wird, der an einer Rahmenstruktur (2) des Fahrzeugs (1) befestigt ist, wobei der Abgaskatalysator und/oder -filter (6) von einer mantelförmigen Struktur (23) umgeben ist, die sich am Halter (13) abstützt, und
wobei es sich bei der mantelförmigen Struktur (23) um eine tragende Baueinheit handelt, die zur Aufnahme zumindest des Beleuchtungselements (19), vorzugsweise auch einer elektronischen Steuereinheit (17), dient.

2. Fahrzeug nach Anspruch 1, **dadurch gekennzeichnet, dass** der Abgaskatalysator und/oder -filter (6) eine im Wesentlichen zylindrische Grundform aufweist und so ausgerichtet ist, dass dessen Mittelachse (7) bezogen auf eine Längsachse des Fahrzeugs (1) etwa senkrecht nach oben verläuft.

3. Fahrzeug nach Anspruch 1 oder 2, **dadurch gekennzeichnet, dass** das Fahrzeug (1) eine Fahrerkabine (4) mit mehreren ein Kabinendach (22) tragenden Pfosten (8) aufweist, wobei der Abgaskatalysator und/oder -filter (6) im Wesentlichen parallel zu einem der Pfosten (8) ausgerichtet ist.

4. Fahrzeug nach Anspruch 3, **dadurch gekennzeichnet, dass** die Fahrerkabine (4) einen etwa mittig angeordneten Fahrersitz (9) aufweist und der Abgaskatalysator und/oder -filter (6) relativ zu einem insbesondere vorderen Pfosten (8) der Fahrerkabine (4) so angeordnet ist, dass für einen auf dem Fahrersitz (9) sitzenden Fahrer der Pfosten (8) die Sicht auf den Abgaskatalysator und/oder -filter (6) weitestgehend verdeckt.

5. Fahrzeug nach Anspruch 1, **dadurch gekennzeichnet, dass** die Abgasnachbehandlungsanlage (5) einen selektiven Katalysator (6) mit im Wesentlichen zylindrischer Grundform aufweist, der an dem Halter (13) befestigt ist.

6. Fahrzeug nach Anspruch 1 oder 5, **dadurch gekennzeichnet, dass** die mantelförmige Struktur (23) aus zwei Halbschalen (14) gebildet wird.

7. Fahrzeug nach einem der vorigen Ansprüche, **dadurch gekennzeichnet, dass** an einer dem Abgaskatalysator und/oder -filter (6) nachgelagerten Rohranordnung (24) eine mit dem Abgaskatalysator und/oder -filter (6) in funktionaler Beziehung stehende Messeinrichtung (21) angeordnet ist.

8. Fahrzeug nach einem der Ansprüche 6 oder 7, **dadurch gekennzeichnet, dass** die mantelförmige Struktur (23) und/oder eine die mantelförmige Struktur (23) umgebende Hitzeschutzstruktur (15) eine Führung (20) zur Aufnahme eines oder mehrerer Kabel (25) aufweist, das zum Anschluss des Beleuchtungselements (19) und/oder einer Komponente (17, 21) der Abgasnachbehandlungsanlage (5) dient.

9. Fahrzeug nach einem der Ansprüche 6 bis 8, **dadurch gekennzeichnet, dass** die mantelförmige Struktur (23) von einer Hitzeschutzstruktur (15) umgeben ist, die zumindest eine Aussparung (26) aufweist, durch welche das Beleuchtungselement (19) nach außen abragt.

10. Fahrzeug nach einem der vorigen Ansprüche, **dadurch gekennzeichnet, dass** eine der Abgasnachbehandlungsanlage (5) zugeordnete elektronische Steuereinrichtung (17) in eine für das Beleuchtungselement (19) vorgesehene Gehäuseeinheit (18) integriert ist.

## Claims

1. An agricultural vehicle, in particular a tractor (1), with an internal combustion engine (3) with which an exhaust gas post-treatment assembly (5) is associated, which has at least one exhaust gas catalyst and/or exhaust gas filter (6) for the reduction of emissions from the internal combustion engine (3), **characterized in that** the exhaust gas post-treatment assembly (5) is configured to receive at least one lighting element (19), in particular a direction indicator and/or a position light of the vehicle (1),
wherein the exhaust gas post-treatment assembly (5) is received by a holder (13) which is secured to a frame structure (2) of the vehicle (1), wherein the exhaust gas catalyst and/or exhaust gas filter (6) is surrounded by a sheath-shaped structure (23) which is supported on the holder (13), and wherein the sheath-shaped structure (23) is a load-bearing structural unit which serves to receive at least the lighting element (19), preferably also an electronic control unit (17).

2. The vehicle according to claim 1, **characterized in that** the exhaust gas catalyst and/or exhaust gas filter (6) has a substantially cylindrical basic shape and is configured such that its central axis (7) runs approximately perpendicularly upwards with respect to a longitudinal axis of the vehicle (1).

3. The vehicle according to claim 1 or claim 2, **characterized in that** the vehicle (1) has a driver's cab (4) with a plurality of posts (8) which support a cab roof (22), wherein the exhaust gas catalyst and/or exhaust gas filter (6) is orientated substantially parallel to one of the posts (8).

4. The vehicle according to claim 3, **characterized in that** the driver's cab (4) has an approximately centrally disposed driver's seat (9) and the exhaust gas catalyst and/or exhaust gas filter (6) is disposed relative to a post (8), in particular a front post (8), of the driver's cab (4) in a manner such that as far as possible, the post (8) conceals the exhaust gas catalyst and/or exhaust gas filter (6) from view for a driver seated on the driver's seat (9).

5. The vehicle according to claim 1, **characterized in that** the exhaust gas post-treatment assembly (5) has a selective catalyst (6) with a substantially cylindrical basic shape and which is secured to the holder (13).

6. The vehicle according to claim 1 or claim 5, **characterized in that** the sheath-shaped structure (23) is formed from two half-shells (14).

7. The vehicle according to one of the preceding claims, **characterized in that** a measuring device (21) which is in a functional relationship with the exhaust gas catalyst and/or exhaust gas filter (6) is disposed on a pipe assembly (24) which is downstream of the exhaust gas catalyst and/or exhaust gas filter (6).

8. The vehicle according to claim 6 or claim 7, **characterized in that** the sheath-shaped structure (23) and/or a thermal protection structure (15) which surrounds the sheath-shaped structure (23) has a guide (20) for receiving one or more cables (25) which serves to connect the lighting element (19) and/or a component (17, 21) of the exhaust gas post-treatment assembly (5).

9. The vehicle according to one of claims 6 to 8, **characterized in that** the sheath-shaped structure (23) is surrounded by a thermal protection structure (15) which has at least one opening (26) out of which the lighting element (19) protrudes.

10. The vehicle according to one of the preceding claims, **characterized in that** an electronic control device (17) associated with the exhaust gas post-treatment assembly (5) is integrated into a housing unit (18) provided for the lighting element (19).

## Revendications

1. Véhicule agricole, en particulier tracteur (1), comprenant un moteur à combustion interne (3) auquel est associée une installation de post-traitement de gaz d'échappement (5) qui comporte au moins un catalyseur et/ou filtre de gaz d'échappement (6) pour réduire des émissions du moteur à combustion interne (3), **caractérisé en ce que** l'installation de post-traitement de gaz d'échappement (5) est conçue pour recevoir au moins un élément d'éclairage (19), en particulier un indicateur de direction et/ou un feu de position du véhicule (1), l'installation de post-traitement de gaz d'échappement (5) étant reçue par un support (13) qui est fixé à une structure de bâti (2) du véhicule (1), le catalyseur et/ou filtre de gaz d'échappement (6) étant entouré par une structure en forme d'enveloppe (23) qui prend appui sur le support (13), et la structure en forme d'enveloppe (23) étant constituée par une unité structurelle porteuse qui sert à recevoir au moins l'élément d'éclairage (19), de préférence aussi une unité de commande électronique (17) .

2. Véhicule selon la revendication 1, **caractérisé en ce que** le catalyseur et/ou filtre de gaz d'échappement (6) présente une forme de base sensiblement cylindrique et est agencé de façon que son axe médian (7) s'étende sensiblement perpendiculairement vers le haut par rapport à un axe longitudinal du véhicule (1) .

3. Véhicule selon la revendication 1 ou 2, **caractérisé en ce que** le véhicule (1) comporte une cabine de conduite (4) avec plusieurs poteaux (8) portant un toit de cabine (22), le catalyseur et/ou filtre de gaz d'échappement (6) étant agencé sensiblement parallèlement à un des poteaux (8).

4. Véhicule selon la revendication 3, **caractérisé en ce que** la cabine de conduite (4) comporte un siège de conducteur (9) disposé sensiblement au milieu, et le catalyseur et/ou filtre de gaz d'échappement (6) est disposé par rapport à un poteau en particulier avant (8) de la cabine de conduite (4) de façon que, pour un conducteur assis sur le siège de conducteur (9), le poteau (8) masque en majeure partie la vue sur le catalyseur et/ou filtre de gaz d'échappement (6).

5. Véhicule selon la revendication 1, **caractérisé en ce que** l'installation de post-traitement de gaz d'échappement (5) comporte un catalyseur sélectif (6) avec une forme de base sensiblement cylindrique, lequel est fixé au support (13).

6. Véhicule selon la revendication 1 ou 5, **caractérisé en ce que** la structure en forme d'enveloppe (23) est formée de deux demi-coques (14).

7. Véhicule selon une des revendications précédentes, **caractérisé en ce que** sur un agencement de tuyau (24) disposé en aval du catalyseur et/ou filtre de gaz d'échappement (6) est disposé un équipement de mesure (21) en relation fonctionnelle avec le catalyseur et/ou filtre de gaz d'échappement (6) .

8. Véhicule selon une des revendications 6 ou 7, **caractérisé en ce que** la structure en forme d'enveloppe (23) et/ou une structure de protection thermique (15) entourant la structure en forme d'enveloppe (23) comporte un guide (20) pour recevoir un ou plusieurs câbles (25) qui sert à connecter l'élément d'éclairage (19) et/ou un composant (17, 21) de l'installation de post-traitement de gaz d'échappement (5).

9. Véhicule selon une des revendications 6 à 8, **caractérisé en ce que** la structure en forme d'enveloppe (23) est entourée par une structure de protection thermique (15) qui comporte au moins un évidement (26) à travers lequel l'élément d'éclairage (19) dépasse vers l'extérieur.

10. Véhicule selon une des revendications précédentes, **caractérisé en ce qu'**une unité de commande électronique (17) associée à l'installation de post-traitement de gaz d'échappement (5) est intégrée dans une unité de carter (18) prévue pour l'élément d'éclairage (19).
